# EUROPÄISCHE PATENTSCHRIFT

(11) **EP 3 913 455 B1**
(45) Veröffentlichungstag und Bekanntmachung des Hinweises auf die Patenterteilung: **16.08.2023**
(21) Anmeldenummer: 21169058.1
(22) Anmeldetag: 19.04.2021
(51) Int. Cl.: G05D 1/02

(54) **STEUERUNG EINES FAHRZEUGS ÜBER REFERENZ- SENSORDATEN**
CONTROL OF A VEHICLE VIA REFERENCE SENSOR DATA
COMMANDE D'UN VÉHICULE AU MOYEN DES DONNÉES DE CAPTEUR DE RÉFÉRENCE

(30) Priorität: 18.05.2020 DE 102020206207; 14.08.2020 DE 102020210351
(43) Veröffentlichungstag der Anmeldung: 24.11.2021
(73) Patentinhaber: ZF Friedrichshafen AG, 88046 Friedrichshafen (DE)
(72) Erfinder: Heinzler, Andreas, 88212 Ravensburg (DE); Heller, Carolin, 88147 Achberg (DE); Birk, Markus, 88045 Friedrichshafen (DE); Jager, Gabriela, 88048 Friedrichshafen (DE)

(56) Entgegenhaltungen:
- WO-A1-2016/200508
- DE-A1-102018 123 451
- US-A1- 2016 041 557

## Beschreibung

Die Erfindung betrifft ein Steuerungsverfahren nach dem Oberbegriff von Anspruch 1, ein Computerprogramm nach Anspruch 3 und eine Datenverarbeitungsvorrichtung nach Anspruch 4.

Die Druckschrift DE 34 08 720 A1 offenbart ein gleisloses Flurfördersystem für den Stückguttransport in Hallen. Das Flurfördersystem besteht aus Motorfahrzeugen mit einem Lenkantrieb und aus einem Leitsystem, das die Fahrzeuge auf vorbestimmten Fahrspuren führt. Damit die einzelnen Fahrzeuge auf beliebig wählbaren Fahrbahnen ohne aufwändige Rüstarbeiten fahren können, weist das Leitsystem entweder mehrere ortsfeste Sender und einen auf jedem Fahrzeug installierten Empfänger mit Rechner oder einen auf dem Fahrzeug installierten Sender mit einem Empfänger und mindestens zwei ortsfest überflur angeordneten Empfängern mit einem Rechner auf. Die Fahrspuren der Fahrzeuge werden eingelernt, indem ein menschlicher Bediener die Fahrzeuge beim Abfahren der jeweiligen Fahrspur manuell steuert. Die dabei erzeugten Daten werden als Referenz-Daten genutzt, um bei einer späteren Fahrt durch einen Vergleich mit den aktuellen Sensordaten die Fahrzeugposition zu bestimmen und das Fahrzeug so entlang der vorbestimmten Fahrspuren zu navigieren.

In WO 2016/200508 A1 werden Vorrichtungen, Verfahren und Speichermedien (transitorisch und nicht-transitorisch) beschrieben, die Sensordaten von einer oder mehreren Sensorvorrichtungen empfangen, die eine Benutzergeste im dreidimensionalen Raum darstellen, eine Flugbahn zumindest teilweise anhand der Sensordaten bestimmen und die Flugbahn im Speicher speichern, um den Betrieb einer Drohne zu steuern. Andere Ausführungsformen können beschrieben und/oder beansprucht werden.

DE 10 2018 123 451 A1 zeigt ein Verfahren und eine Vorrichtung zum automatischen Rückwärtsfahren eines Fahrzeugs. Ein Vorwärtsfahrtpfad eines Zielfahrzeugs wird in einem Vorwärtsfahrtprozess des Zielfahrzeugs aufgezeichnet. Das Zielfahrzeug wird so gesteuert, dass es dann von einer momentanen Position aus rückwärts fährt.

Der Erfindung liegt die Aufgabe zugrunde, die Steuerung autonom oder teilautonom fahrender Fahrzeuge zu verbessern. Diese Aufgabe wird gelöst durch ein Steuerungsverfahren nach Anspruch 1, ein Computerprogramm nach Anspruch 3 und eine Datenverarbeitungsvorrichtung nach Anspruch 4. Bevorzugte Weiterbildungen sind in den Unteransprüchen enthalten und ergeben sich aus nachfolgender Beschreibung sowie dem in den Figuren dargestellten Ausführungsbeispiel.

Das erfindungsgemäße Steuerungsverfahren dient dazu, ein autonom oder teilautonom fahrendes Fahrzeug zu steuern. Ein autonom oder teilautonom fahrendes Fahrzeug weist ein oder mehrere Steuergeräte auf, die das Fahrzeug mindestens teilweise autonom, das heißt ohne Zutun eines menschlichen Bedieners, steuern. Dabei handelt es sich bei dem mittels des erfindungsgemäßen Steuerverfahrens gesteuerten Fahrzeug um ein Flurförderzeug, etwa einen Gabelstapler.

Das Steuerungsverfahren sieht vor, dass das Fahrzeug zunächst manuell, das heißt, durch einen menschlichen Bediener, etwa einen Fahrer oder eine von außerhalb des Fahrzeugs mittels einer Fernbedienung auf das Fahrzeug einwirkende Person, gesteuert wird. Währenddessen werden Sensordaten mindestens eines Sensors des Fahrzeugs gespeichert.

Die Erfindung sieht vor, dass die gespeicherten Sensordaten als Referenzdaten für eine autonome Fahrt verwendet werden. In einem entsprechenden Verfahrensschritt wird das Fahrzeug autonom, das heißt ohne Zutun eines menschlichen Bedieners, gesteuert. Währenddessen werden die Sensordaten des mindestens einen Sensors erfasst. Die erfassten Daten werden mit den gespeicherten Daten abgeglichen.

Durch das erfindungsgemäße Steuerungsverfahren wird manuell eine Fahrt eingelernt, die anschließend autonom anhand der abgeglichen Sensordaten repliziert wird. Dies ist gegenüber bekannten Verfahren dahingehend von Vorteil, dass auf Sensoren des Fahrzeugs zurückgegriffen werden kann, die ohnehin bereits vorhanden sind. Es ist nicht erforderlich, zusätzliche Sensoren zur Lokalisierung des Fahrzeugs in der Umgebung anzubringen.

Erfindungsgemäß wird eine möglichst hohe Übereinstimmung der gespeicherten Sensordaten mit den während der autonomen Steuerung des Fahrzeugs erfassten Sensordaten angestrebt. Das Fahrzeug wird autonom derart gesteuert, dass die erfassten Sensordaten den gespeicherten Sensordaten angeglichen werden. Dies bedeutet, dass das Fahrzeug autonom derart gesteuert wird, dass eine Abweichung der erfassten Sensordaten von den gespeicherten Sensordaten möglichst gering ausfällt. Dies lässt sich etwa erreichen mittels eines Maßes für die Abweichung. Als Maß für die Abweichung eignet sich beispielsweise das arithmetische Mittel der Differenzen einzelner zueinander korrespondierender erfasster und gespeicherter Sensordaten. Vorzugsweise wird das Fahrzeug autonom derart gesteuert, dass die Abweichung Null beträgt, dass also die erfassten Sensordaten mit den gespeicherten Sensordaten übereinstimmen.

Dabei handelt es sich bei den Sensordaten, die gespeichert werden, während das Fahrzeug manuell gesteuert wird, und die während der autonomen Fahrt erfasst und mit den gespeicherten Sensordaten abgeglichen werden, um mindestens eine Bewegungsgröße des Fahrzeugs oder eines Teils davon. Vorzugsweise werden ausschließlich Bewegungsgrößen des Fahrzeugs oder eines Teils davon erfasst und abgeglichen.

Eine Bewegungsgröße des Fahrzeugs oder eines Teils des Fahrzeugs ist eine physikalische Größe, die eine Bewegung des Fahrzeugs oder eines Teils des Fahrzeugs mindestens teilweise beschreibt. Entsprechende Sensoren sind beispielsweise Fahrpedal-, Arbeitshydraulik-, Raddrehzahl- oder Lenkwinkelsensoren. Mittels eines Fahrpedalsensors wird die Position eines Fahrpedals erfasst. Über die Position des Fahrpedals lässt sich die Antriebsleistung des Fahrzeugs beeinflussen. Ein Arbeitshydrauliksensor erfasst eine Position mindestens eines Teils einer Arbeitshydraulik des Fahrzeugs. Anstatt eines solchen Sensors der Arbeitshydraulik kann die Position des Teils der Arbeitshydraulik, insbesondere einer Hubvorrichtung, auch anhand der Ansteuerung entsprechender Ventile eines betreffenden Hydraulikzylinders ermittelt werden. Über einen Raddrehzahlsensor wird die Drehzahl eines Rads des Fahrzeugs gemessen. Ein Lenkwinkelsensor erfasst einen Lenkwinkel, das heißt einen Drehwinkel eines Lenkrads des Fahrzeugs oder einen Einschlagwinkel der Räder einer lenkbaren Achse des Fahrzeugs.

Die erfindungsgemäße Ausgestaltung ist von Vorteil, da Sensoren zur Erfassung von Bewegungsgrößen vergleichsweise günstig sind. Viele derartige Sensoren sind in herkömmlichen Fahrzeugen bereits vorhanden und müssen nicht einmal nachgerüstet werden. Insbesondere ermöglicht es die Weiterbildung, auf teure optische Sensoren zu verzichten.

Erfindungsgemäß wird eine manuell gesteuerte Bewegungsfolge aus den gespeicherten Sensordaten rekonstruiert. Die manuell gesteuerte Bewegungsfolge ist eine Bewegungsfolge, die das Fahrzeug während der manuellen Steuerung ausführt. Mit Bewegungsfolge wird eine Folge von Bewegungen des Fahrzeugs relativ zu einem ortsfesten Bezugssystem, etwa einer Straße oder einem Gebäude, und/oder von einem oder mehreren Teilen des Fahrzeugs relativ zu einem fahrzeugfesten Bezugssystem, beispielsweise einer Karosserie oder einem Rahmen des Fahrzeugs, verstanden.

Die autonome Steuerung des Fahrzeugs erfolgt unter Vorgabe der zuvor rekonstruierten manuell gesteuerten Bewegungsfolge. Das Fahrzeug führt dabei autonom die rekonstruierte Bewegungsfolge aus. Es wird autonom derart gesteuert, dass es die rekonstruierte Bewegungsfolge ausführt. Dies bedeutet, dass die autonom gesteuerte Bewegungsfolge der manuell gesteuerten Bewegungsfolge angeglichen wird.

Dabei kann jedoch auch vorgesehen sein, dass die Steuerung des Fahrzeugs automatisiert anstatt autonom erfolgt. Hierunter ist zu verstehen, dass vorgesehen sein kann, dass das Fahrzeug die zuvor rekonstruierte manuell gesteuerte Bewegungsfolge ausführt, ein Bediener jedoch eine überwachende Funktion übernimmt. Insbesondere könnte ein Bediener auf (unerwartet bzw. ungeplant) auftretende Hindernisse und Gefahrensituationen reagieren. Hierdurch kann die Umsetzung der Funktion besonders einfach erfolgen, da keine zusätzlichen Sensoren für eine Hinderniserkennung vorgesehen werden müssen. Folglich könnte die automatisierte Steuerung des Fahrzeugs als assistierte Fahrfunktion bzw. Fahrerassistenzfunktion/- system betrachtet werden, welche Sensorsignale bereits vorhandener Sensorik verwendet.

In einer Erweiterung ist eine Ausgabe eines Warnhinweises vorgesehen, falls durch die autonome Steuerung eine unzulässige Abweichung eines Ist-Wertes von einem Soll-Wert erkannt wird. Exemplarisch wird in diesem Zusammenhang auf einen unerwarteten Schlupfwert an einem Rad oder ein blockierendes Rad hingewiesen. Durch die Ausgabe des Warnhinweises kann der Bediener bei Vorliegen einer unzulässigen Abweichung korrigierend eingreifen oder die Ausführung der autonomen Steuerung beenden und in der Folge die manuelle Steuerung übernehmen. Auch kann bei entsprechender Konfiguration die automatische Steuerung des Fahrzeugs selbständig anstatt durch den Bediener abgebrochen werden, wenn eine unzulässige Abweichung erkannt wurde. Eine unzulässige Abweichung beschreibt dabei eine solche Abweichung, welche einen Toleranzwert übersteigt. Der Toleranzwert kann dabei auch den Wert 0 annehmen. In der Konsequenz ist jede noch so kleine Abweichung unzulässig.

Die Ausgangspositionen des Fahrzeugs zu Beginn der manuell gesteuerten Bewegungsfolge und der autonom gesteuerten Bewegungsfolge stimmen bevorzugt überein. Dies bedeutet, dass das Fahrzeug vor der autonomen Ausführung der Bewegungsfolge diejenige Position anfährt, die es zu Beginn der manuell gesteuerten Bewegungsfolge eingenommen hatte.

Das Fahrzeug führt die autonom gesteuerte Bewegungsfolge ausgehend von einer Anfangsposition der rekonstruierten Bewegungsfolge aus. Dies bewirkt, dass die autonome Steuerung des Fahrzeugs exakt der zuvor vorgegebenen manuellen Steuerung folgt.

Erfindungsgemäß ist vorgesehen, dass die autonom gesteuerte Bewegungsfolge auch ein Betätigen einer Hubvorrichtung bzw. einer Arbeitshydraulik umfasst. Demnach würde nicht nur die Wegstrecke von einer Anfangsposition zu einer Endposition erfasst, sondern auch das Verfahren und Betätigen einer Arbeitshydraulik. Insbesondere soll mittels Flurförderfahrzeugen Ladung von einem Ort zu einem anderen Ort verbracht werden. Dabei weisen Flurförderzeuge üblicherweise eine durch eine Arbeitshydraulik oder eine anderweitig betätigte Hubvorrichtung auf, mittels welcher Ladung aufgenommen und abgeladen werden kann. Typischerweise verfügen Flurförderfahrzeuge über einen Hubmast, an welchem Gabelzinken zur Aufnahme von Paletten, Containern oder sonstigem Stückgut/Behältern angebracht sind. Hierdurch kann an einem Ort Ladung aufgenommen, an einen anderen Ort verbracht und dort abgeladen werden.

Nachdem das Fahrzeug aus den gespeicherten Sensordaten die manuell gesteuerte Bewegungsfolge rekonstruiert hat, führt es diese in einer alternativ bevorzugten Weiterbildung entgegengesetzt aus. Das Fahrzeug wird also autonom derart gesteuert, dass es die manuell gesteuerte Bewegungsfolge entgegengesetzt ausführt. Dies bedeutet, dass die Bewegungen der manuell gesteuerten Bewegungsfolge in entgegengesetzter Reihenfolge mit jeweils umgekehrtem Vorzeichen ausgeführt werden. Dadurch erfolgt die Ausführung der einzelnen Bewegungen in jeweils entgegengesetzter Bewegungsrichtung, wobei die Geschwindigkeit betragsgleich ist.

Die Weiterbildung realisiert eine autonome Rückwärtsfahrt des Fahrzeugs. Während der Rückwärtsfahrt folgt das Fahrzeug in umgekehrter Richtung einer zuvor bereits manuell gefahrenen Trajektorie. Dies ist von Vorteil, da der Fahrer entlastet und das Risiko einer Kollision des Fahrzeugs mit einem Hindernis reduziert wird.

In Bezug auf die Betätigung der Hubvorrichtung kann die Steuerung um eine Anpassungs-Funktion erweitert werden, wenn die entgegengesetzte Bewegungsfolge ausgeführt wird. Die Anpassungs-Funktion bewirkt, dass die Arbeitshydraulik bzw. die Hubvorrichtung nicht exakt entgegengesetzt zu der vorherigen Bewegungsfolge betätigt wird. Vielmehr verharrt die Arbeitshydraulik bzw. die Hubvorrichtung zunächst in dem letzten Zustand nach dem Abladen, damit beispielsweise die Gabelzinken bei Ausführung der entgegengesetzten Bewegungsfolge aus der Palette herausgeführt werden können. Ohne die Berücksichtigung der Anpassungs-Funktion würde nach dem Absenken der Hubvorrichtung zum Abladen der Ladung die Hubvorrichtung wieder angehoben, was ein erneutes Aufnehmen der Ladung zur Folge hätte.

Alternativ oder ergänzend kann die Anpassungs-Funktion derart ausgeführt sein, dass anhand einer erfassten Wegstrecke ermittelt wird, ob sich die Gabelzinken noch in/unter der Ladung befinden. Sobald die zurückgelegte Wegstrecke beim Zurückfahren einen größeren Wert als die Länge der Gabelzinken aufweist, erfolgt eine Betätigung der Arbeitshydraulik bzw. der Hubvorrichtung in der zuvor beschriebenen entgegengesetzten Bewegungsfolge. Dabei kann auch vorgesehen werden, dass das Ausführen der entgegengesetzten Bewegungsfolge der Arbeitshydraulik bzw. der Hubvorrichtung schneller erfolgt, als das Ausführen der entgegengesetzten Bewegungsfolge für die Fahrfunktion des Flurförderfahrzeugs. Hierdurch kann der durch die Anpassungs-Funktion verursachte Offset des Betätigens der Hubvorrichtung bzw. der Arbeitshydraulik kompensiert werden. Auch kann vorgesehen sein, dass nach Abschluss der Anpassungs-Funktion das Ausführen der entgegengesetzten Bewegungsfolge für die Fahrfunktion ausgesetzt, pausiert oder verlangsamt wird, bis der Offset durch die Anpassung-Funktion kompensiert ist. Mit anderen Worten wird hierdurch sichergestellt, dass der Offset zwischen Fahrparametern und Arbeitshydraulikparametern auf ein zulässiges Maß minimiert bzw. gänzlich eliminiert wird.

In Analogie dazu kann auch eine Anpassungs-Funktion vorgesehen sein, bei welcher die Arbeitshydraulik bzw. das Betätigen der Hubvorrichtung nach dem Aufnehmen von Ladung in gleicher Weise mit einem Offset versehen wird. Dies verhindert, dass die aufgenommene Ladung wieder abgeladen/abgestellt wird, wenn die entgegengesetzte Bewegungsfolge ausgeführt wird. Der Offset kann in Form eines variablen oder konstanten Parameters berücksichtigt werden.

Anstatt der automatischen Betätigung der Anpassungs-Funktion auf Basis einer Wegstreckenauswertung kann die Anpassungs-Funktion auch manuell ausgelöst werden, beispielsweise durch Betätigen eines entsprechenden Eingabeelements/Schalters durch den Bediener.

Ferner kann auch vorgesehen sein, dass eine hybride Funktionsausführung erfolgt. Hierunter ist zu verstehen, dass die autonome Rückwärtsfahrt durch das Fahrzeug bzw. eine entsprechende Steuerung ausgeführt wird, während die Betätigung der Arbeitshydraulik bzw. der Hubvorrichtung durch den Bediener erfolgt.

Häufig wird Ladung an Lagerplätzen aufgenommen oder abgeladen, welche nur wenig Platz zum Rangieren und Einbringen/Entnehmen der Ladung ermöglichen. Exemplarisch wird hier auf ein Hochregallager mit engen Lagerplätzen verwiesen. Folglich erfordert das Aufnehmen/Abladen der Ladung eine hohe Aufmerksamkeit des Bedieners zum Betätigen der Arbeitshydraulik bzw. der Hubvorrichtung. Daher kann auch vorgesehen werden, dass das Ausführen der entgegengesetzten Bewegungsfolge zunächst mit einer geringeren Geschwindigkeit ausgeführt wird. Dies kann entweder durch die automatische Steuerung vorgegeben oder durch den Bediener kommandiert werden. Sobald die Ladung aus dem betreffenden Lagerplatz herausgenommen wurde, kann eine Erhöhung der Geschwindigkeit der Ausführung der entgegengesetzten Bewegungsfolge erfolgen.

In einer Weiterbildung ist vorgesehen, dass der Bediener das Ausführen der entgegengesetzten Bewegungsfolge jederzeit durch Betätigen eines Fahrpedals, eines Bremspedals, der Arbeitshydraulik bzw. der Hubvorrichtung und/oder einen Lenkeingriff abbrechen oder überstimmen kann.

Ferner kann zusätzlich eine Begrenzungsfunktion auf ein Fahrpedal oder ein Bremspedal aufgeprägt werden, sodass je nach Betätigungszustand die Ausführung der entgegengesetzten Bewegungsfolge mit einer veränderten Geschwindigkeit erfolgt. In einer möglichen alternativen Ausführung kann über ein separates Eingabeelement eine Reduzierung der Geschwindigkeit der Ausführung der entgegengesetzten Bewegungsfolge in einem Bereich von 0% bis 100% stufenlos angepasst werden.

In gleicher Weise kann auch eine Erhöhung der Ausführung der entgegengesetzten Bewegungsfolge mit einer Geschwindigkeit mit Werten größer 100% erfolgen, um die Funktion beschleunigt auszuführen. Anstatt über ein separates Eingabeelement kann diese Funktion auch temporär einem Fahr- und/oder Bremspedal zugeordnet sein.

Nach der Rückwärtsfahrt entspricht eine Position des Fahrzeugs in einer bevorzugten Weiterbildung der oben beschriebenen Position des Fahrzeugs zu Beginn der manuell gesteuerten Bewegungsfolge. Dies impliziert, dass eine Position des Fahrzeugs zu Beginn der Ausführung der autonom gesteuerten Bewegungsfolge der oben beschriebenen Endposition der manuell gesteuerten Bewegungsfolge entspricht.

Weiterbildungsgemäß stimmen die manuell gesteuerte Bewegungsfolge und die autonom gesteuerte Bewegungsfolge mit umgekehrtem Vorzeichen überein.

Ein erfindungsgemäßes Computerprogramm dient der Ausführung des erfindungsgemäßen Verfahrens oder einer bevorzugten Weiterbildung. Das Computerprogramm ist ausgebildet, eine Datenverarbeitungsvorrichtung zur Ausführung des erfindungsgemäßen Verfahrens oder einer bevorzugten Weiterbildung zu veranlassen, wenn es auf der Datenverarbeitungsvorrichtung ausgeführt wird.

Eine erfindungsgemäße Datenverarbeitungsvorrichtung ist angepasst, das erfindungsgemäße Verfahren oder eine bevorzugte Weiterbildung auszuführen. Beispielsweise ist eine Datenverarbeitungsvorrichtung, die das erfindungsgemäße Computerprogramm enthält, derart angepasst. Insbesondere ist das der Fall, wenn das Computerprogramm zur Ausführung in einen Arbeitsspeicher der Datenverarbeitungsvorrichtung geladen wurde.

Ein bevorzugtes Ausführungsbeispiel der Erfindung ist in den Figuren dargestellt. Übereinstimmende Bezugsziffern kennzeichnen dabei gleiche oder funktionsgleiche Merkmale. Im Einzelnen zeigt:
Fig. 1 einen vorwärtsfahrenden Gabelstapler; und
Fig. 2 einen rückwärtsfahrenden Gabelstapler.

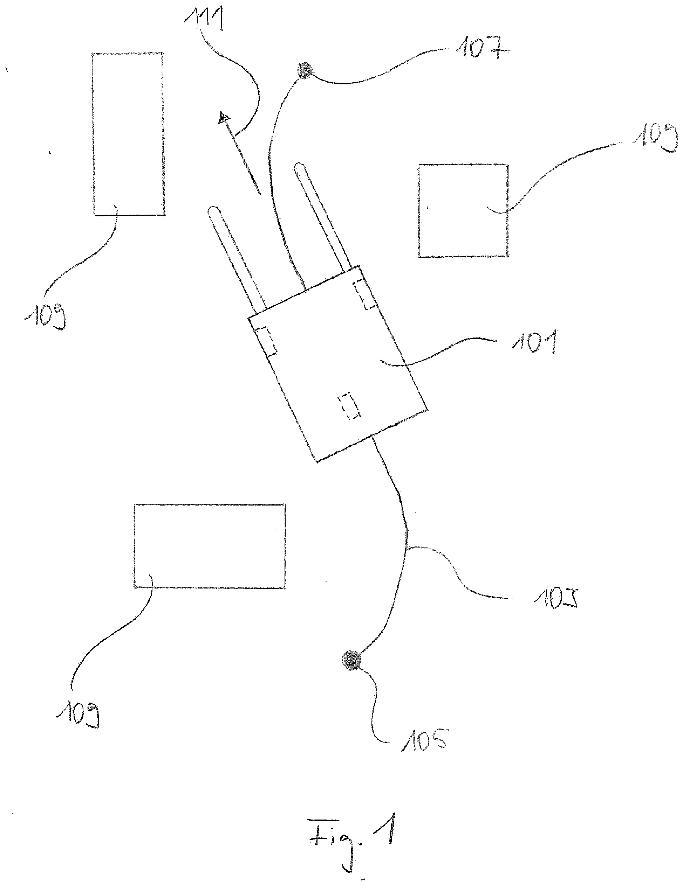

Ein in Fig. 1 dargestellter Gabelstapler 101 fährt entlang einer Trajektorie 103. Die Trajektorie 103 führt von einem Anfangspunkt 105 zu einem Endpunkt 107. Der Gabelstapler 101 startet also an dem Anfangspunkt 105 und fährt die Trajektorie 103 entlang zu dem Endpunkt 107.

Die Trajektorie 103 ist so gewählt, dass der Gabelstapler 101 zwischen Hindernissen 109 hindurchfährt. Er fährt dabei vorwärts in eine erste Fahrtrichtung 111.

Während der Gabelstapler 101 die Trajektorie 103 abfährt, werden die Daten seiner Sensoren aufgenommen und gespeichert. Hat der Gabelstapler 101 den Endpunkt 107 erreicht, kehrt er um.

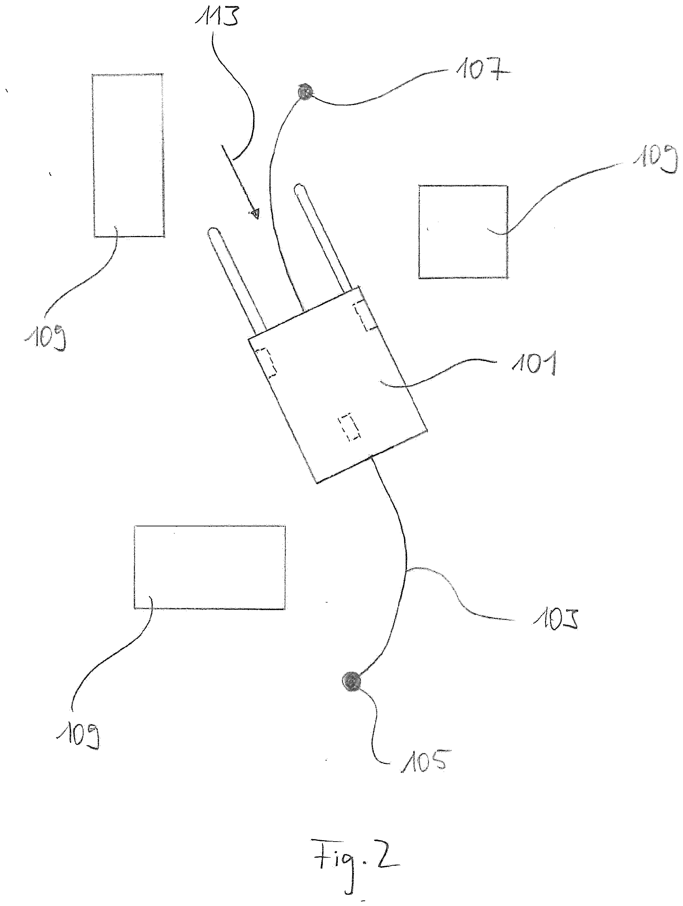

Nach seiner Umkehr fährt der Gabelstapler 101 Er, wie in Fig. 2 dargestellt, rückwärts in eine zweite Fahrtrichtung 201 entlang derselben Trajektorie 103. Zur Orientierung verwendet der Gabelstapler dabei die während der Vorwärtsfahrt gesammelten Sensordaten. Er gleicht diese Sensordaten mit entsprechenden Sensordaten ab, die er während der Rückwärtsfahrt erfasst. Der Gabelstapler 101 legt seine Trajektorie 103 bei der Rückwärtsfahrt derart fest, dass die Sensordaten betragsmäßig übereinstimmen.

### Bezugszeichen

- 101: Gabelstapler
- 103: Trajektorie
- 105: Anfangspunkt
- 107: Endpunkt
- 109: Hindernis
- 111: erste Fahrtrichtung
- 201: zweite Fahrtrichtung

## Patentansprüche

1. Steuerungsverfahren für ein Flurförderfahrzeug (101); wobei
das Flurförderfahrzeug (101) manuell gesteuert wird, während Sensordaten mindestens eines Sensors des Flurförderfahrzeugs (101) gespeichert werden; wobei
das Flurförderfahrzeug (101) autonom gesteuert wird, während Sensordaten des mindestens einen Sensors erfasst und mit den gespeicherten Sensordaten abgeglichen werden; wobei
das Flurförderfahrzeug (101) autonom derart gesteuert wird, dass die erfassten Sensordaten den gespeicherten Sensordaten angeglichen werden; wobei
als Sensordaten mindestens eine Bewegungsgröße des Flurförderfahrzeugs (101) oder eines Teils des Flurförderfahrzeugs (101) erfasst und gespeichert wird; wobei
eine Bewegungsfolge des Flurförderfahrzeugs (101) aus den gespeicherten Sensordaten rekonstruiert wird; wobei
das Flurförderfahrzeug (101) die Bewegungsfolge autonom ausführt; wobei
das Flurförderfahrzeug (101) die Bewegungsfolge ausgehend von einer Anfangsposition (105) der rekonstruierten Bewegungsfolge ausführt; wobei
das Flurförderfahrzeug (101) die Bewegungsfolge entgegengesetzt ausführt, **dadurch gekennzeichnet, dass** die Bewegungsfolge neben einer erfassten Wegstrecke auch ein Betätigen einer Hubvorrichtung oder einer Arbeitshydraulik umfasst, wobei eine Anpassungs-Funktion für das Betätigen der Hubvorrichtung oder der Arbeitshydraulik vorgesehen ist.

2. Steuerungsverfahren nach dem vorhergehenden Anspruch; **dadurch gekennzeichnet, dass**
das Flurförderfahrzeug (101) die Bewegungsfolge ausgehend von einer Endposition (107) der rekonstruierten Bewegungsfolge ausführt.

3. Computerprogramm, das ausgebildet ist, eine Datenverarbeitungsvorrichtung zur Ausführung eines Verfahrens nach einem der Ansprüche 1 oder 2 zu veranlassen, wenn es auf der Datenverarbeitungsvorrichtung ausgeführt wird.

4. Datenverarbeitungsvorrichtung, die angepasst ist, ein Verfahren nach einem der vorhergehenden Verfahrensansprüche auszuführen.

## Claims

1. Control method for a pallet truck (101); wherein
the pallet truck (101) is controlled manually while sensor data from at least one sensor of the pallet truck (101) are stored; wherein
the pallet truck (101) is controlled autonomously while sensor data from the at least one sensor are captured and compared against the stored sensor data; wherein
the pallet truck (101) is controlled autonomously in such a way that the captured sensor data are brought into line with the stored sensor data; wherein
the sensor data captured and stored are at least one motion variable of the pallet truck (101) or of a part of the pallet truck (101); wherein
a motion sequence of the pallet truck (101) is reconstructed from the stored sensor data; wherein
the pallet truck (101) performs the motion sequence autonomously; wherein
the pallet truck (101) performs the motion sequence starting from an initial position (105) in the reconstructed motion sequence; wherein
the pallet truck (101) performs the motion sequence inversely, **characterized in that** the motion sequence encompasses not only a recorded path but also operation of a lifting apparatus or of operating hydraulics, there being provision for an adaptation function for operating the lifting apparatus or the operating hydraulics.

2. Control method according to the preceding claim, **characterized in that**
the pallet truck (101) performs the motion sequence starting from a final position (107) in the reconstructed motion sequence.

3. Computer program designed to cause a data processing apparatus to perform a method according to either of Claims 1 and 2 when it is executed on the data processing apparatus.

4. Data processing apparatus adapted to perform a method according to one of the preceding method claims.

## Revendications

1. Procédé de commande pour un chariot de manutention (101) ;
le chariot de manutention (101) étant commandé manuellement, tandis que des données de capteur d'au moins un capteur du chariot de manutention (101) sont mémorisées ;
le chariot de manutention (101) étant commandé de manière autonome, tandis que des données de capteur de l'au moins un capteur sont acquises et alignées avec les données de capteur mémorisées ;
le chariot de manutention (101) étant commandé de manière autonome de telle sorte que les données de capteur acquises sont harmonisées avec les données de capteur mémorisées ;
les données de capteur acquises et mémorisées étant au moins une grandeur de mouvement du chariot de manutention (101) ou d'une partie du chariot de manutention (101) ;
une séquence de mouvements du chariot de manutention (101) étant reconstruite à partir des données de capteur mémorisées ;
le chariot de manutention (101) exécutant la séquence de mouvements de manière autonome ;
le chariot de manutention (101) exécutant la séquence de mouvements reconstruite en partant d'une position de départ (105) ;
le chariot de manutention (101) exécutant la séquence de mouvements en sens inverse, **caractérisé en ce que** la séquence de mouvements, outre un parcours acquis, comprend également un actionnement d'un dispositif de levage ou d'une hydraulique de travail, une fonction d'adaptation étant prévue pour le dispositif de levage ou l'hydraulique de travail.

2. Procédé de commande selon la revendication précédente ; **caractérisé en ce que**
le chariot de manutention (101) exécute la séquence de mouvements à partir d'une position finale (107) de la séquence de mouvements reconstruite.

3. Programme informatique, qui est configuré pour amener un dispositif de traitement de données à mettre en œuvre un procédé selon l'une des revendications 1 ou 2 lorsqu'il est exécuté sur le dispositif de traitement de données.

4. Dispositif de traitement de données, qui est adapté pour mettre en œuvre un procédé selon l'une des revendications précédentes.
